# EUROPEAN PATENT SPECIFICATION

(11) **EP 1 500 839 B1**
(45) Date of publication and mention of the grant of the patent: **11.07.2007**
(21) Application number: 04011825.9
(22) Date of filing: 18.05.2004
(51) Int. Cl.: F16D 55/40

(54) **Wet brake**
Nasslaufende Bremse
Frein immergé dans un liquide

(30) Priority: 22.07.2003 JP 2003199984
(43) Date of publication of application: 26.01.2005
(73) Proprietor: KABUSHIKI KAISHA TOYOTA JIDOSHOKKI, Kariya-shi, Aichi-ken (JP)
(72) Inventor: Masuda, Hideo, Kariya-shi Aichi-ken (JP)
(74) Representative: TBK-Patent

(56) References cited:
- EP-A- 1 162 383
- US-A- 3 946 837
- US-A- 5 050 710
- US-A- 5 186 284
- US-B1- 6 543 222

## Description

### BACKGROUND OF THE INVENTION

### Field of the Invention:

The present invention relates to a wet brake and, in particular, to a wet brake of the type in which a service piston pressurizes a disc mounted to an output shaft to thereby apply a braking force to the output shaft, and in which a parking piston pressurizes the disc through the service piston to thereby generate a braking force at the time of parking.

### Description of the Related Art:

Conventionally, in an industrial vehicle like a forklift, there has been used a wet brake in which a disc rotating with an output shaft is arranged between a pressure receiving member and a service piston in a brake housing, and in which the disc is pressurized by the service piston to generate a braking force, thereby braking a wheel. Recently, some wet brakes of this type have, in addition to the above-described service brake function, a parking brake function.

For example, JP 11-222109 A discloses a wet brake in which a parking piston pressurizes a disc through a service piston by the urging force of a spring to generate a braking force at the time of parking, thereby braking a wheel.

In this wet brake, when, in the state in which the parking brake is worked, pressure oil is poured into an oil chamber formed between the parking piston and a first reaction force receiving member (cylindrical member 5), the parking piston slides so as to move away from the service piston against the urging force of the spring, thereby canceling the pressurization for the disc. That is, the braking force at the time of parking is canceled. Further, when, in the state in which the parking brake is thus released, pressure oil is poured into an oil chamber formed between a second reaction force receiving member (plate-like member 7) and the service piston, the service piston slides toward the disc to pressurize the disc, thereby generating a braking force to brake a wheel.

It is to be noted, however, that in the wet brake as disclosed in JP 11-222109 A, the reaction force of the pressure oil that moves the parking piston is received by the first reaction force receiving member, and the reaction force of the pressure oil that moves the service piston is received by the second reaction force receiving member. This means it is necessary to provide reaction force receiving members respectively corresponding to the pistons, with the result that the number of parts becomes large, that the construction of the wet brake as a whole is rather complicated, and that the assembly operation for the wet brake as a whole is difficult.

Further, to cause the pistons to slide smoothly without involving any oil leakage from the oil chamber between the first reaction force receiving member and the parking piston and from the oil chamber between the second reaction force receiving member and the service piston, a high level of accuracy in assembly is required. As a result, high accuracy is also required in the machining of the first reaction force receiving member and the second reaction force receiving member, etc., resulting in a rather high machining cost.

Document US 3 946 837 discloses a met brake according to the preamble of claim 1.

### SUMMARY OF THE INVENTION

The present invention has been made to solve the problems described above, and provides a wet brake according to the definition in claim 1, having a simple structure and which is easy to assemble, especially as the adjuster mechanism in claim 1 allows exact setting up of the actuating parts still after assembly of the brake

### BRIEF DESCRIPTION OF THE DRAWING

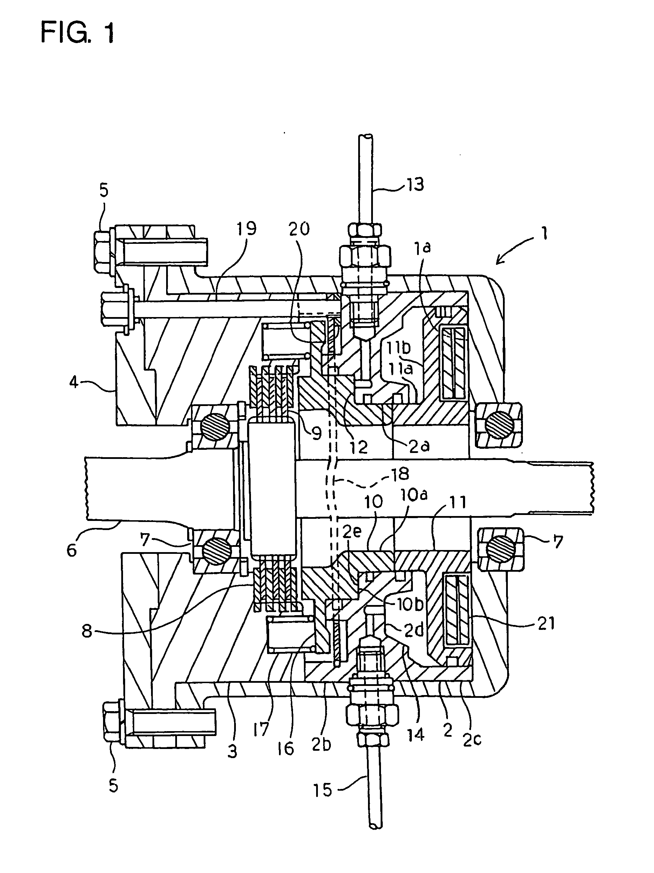

Fig. 1 is a sectional view of a wet brake according to an embodiment of the present invention.

### DETAILED DESCRIPTION OF THE PREFERRED EMBODIMENT

An embodiment of the present invention will now be described with reference to the accompanying drawing.

Fig. 1 is a sectional view of a wet brake according to an embodiment of the present invention. The wet brake has a housing 1 mounted to a machine base, and the housing 1 is formed as a bottomed cylinder having a bottom surface 1a. Inside the housing 1, there are arranged a reaction force receiving member 2 and a pressure receiving member 3 sequentially from the bottom surface 1a side, and a cover 4 is fixed to the end portion of the housing 1 on the opposite side of the bottom surface 1a by means of a plurality of bolts 5. Further, the bottom surface 1a of the housing 1, the reaction force receiving member 2, the pressure receiving member 3, and the cover 4 have through-holes at their respective centers, and an output shaft 6 is passed through these through-holes and is rotatably supported by a pair of bearings 7.

This wet brake is mounted to the machine base such that the cover 4 faces the outer surface side of the machine base and that the bottom surface 1a of the housing 1 faces the inner side of the machine base, with a wheel being connected to the cover 4 side end of the output shaft 6 and a motor being connected to the bottom surface 1a side end of the output shaft 6. From here, the outer surface side of the machine base will be referred to as a front side of the wet brake, and the inner side of the machine base will be referred to as a rear side thereof.

In the housing 1, an annular cutout is formed in the rear surface of the pressure receiving member 3 opposed to the reaction force receiving member 2, around the through-hole thereof, and, inside this cutout, a plurality of annular pressurizing plates 8 are mounted at predetermined longitudinal intervals. At the outer periphery of the output shaft 6, there are mounted a plurality of annular discs 9 arranged alternately with the plurality of pressurizing plates 8.

Further, inside the housing 1, an annular service piston 10 is inserted into a second portion of the through-hole formed at the center of the reaction force receiving member 2 from the front side thereof opposed to the pressure receiving member 3, whereas an annular parking piston 11 is inserted into a first portion of this through-hole of the reaction force receiving member 2 from the rear side thereof opposed to the bottom surface 1a of the housing 1. The service piston 10 and the parking piston 11 are retained so as to be slidable in the axial direction, that is, in the longitudinal direction. The reaction force receiving member 2 functions as a reaction force receiving member common to the service piston 10 and the parking piston 11.

The reaction force receiving member 2 has an annular main body portion 2a with a through-hole at its center, and, in the outer periphery of the main body portion 2a, there are formed a front annular portion 2b and a rear annular portion 2c so as to protrude from the main body portion 2a in the axial direction, that is, in the longitudinal direction. The outer peripheral surfaces of the main body portion 2a, the front annular portion 2b, and the rear annular portion 2c form the same cylindrical surface, and this cylindrical surface is in contact with the inner peripheral surface of the housing 1. Further, the rear end surface of the rear annular portion 2c abuts the bottom surface 1a of the housing 1, and the front end surface of the front annular portion 2b abuts the rear surface of the pressure receiving member 3, therefore the reaction force receiving member 2 is fixed to the bottom portion of the housing 1. Further, the main body portion 2a of the reaction force receiving member 2 has an annular recess 2d in the rear surface thereof opposed to the bottom surface 1a of the housing 1, and an annular cutout 2e formed along the inner periphery in the front surface thereof opposed to the pressure receiving member 3.

Here, the service piston 10 has a slide portion 10a and a piston portion 10b protruding sidewise with respect to the moving direction of the slide portion 10a, that is, protruding radially. The outer peripheral surface of the slide portion 10a is in contact with the inner peripheral surface of the main body portion 2a of the reaction force receiving member 2 through the intermediation of an O-ring, and the outer peripheral surface of the piston portion 10b is in contact with the inner peripheral surface of the cutout 2e of the main body portion 2a of the reaction force receiving member 2 through the intermediation of an O-ring. Between the rear end surface of the piston portion 10b of the service piston 10 and the cutout 2e of the front surface of the main body portion 2a of the reaction force receiving member 2, there is formed a service oil chamber 12, which is connected to a service oil port 13 through an oil passage.

The parking piston 11 has also a slide portion 11a and a piston portion 11b protruding sidewise with respect to the moving direction of the slide portion 11a, that is, protruding radially. The outer peripheral surface of the slide portion 11a is in contact with the inner peripheral surface of the main body portion 2a of the pressure receiving member 2 through the intermediation of an O-ring, and the outer peripheral surface of the piston portion 11b is in contact with the inner peripheral surface of the rear annular portion 2c of the pressure receiving member 2 through the intermediation of an O-ring. Between the front end surface of the piston portion 11b of the parking piston 11 and the recess 2d of the rear surface of the main body portion 2a of the reaction force receiving member 2, there is formed a parking oil chamber 14, which is connected to a parking oil port 15 through an oil passage.

In this way, the pressure receiving member 2 is in contact with the inner peripheral surface of the housing 1, and the outer peripheral surface of the service piston 10 and the outer peripheral surface of the parking piston 11 are each in contact with the pressure receiving member 2, not in direct contact with the inner peripheral surface of the housing 1.

The piston portion 10b of the service piston 10 has the protrusion 16 protruding sidewise with respect to the moving direction thereof, that is, protruding radially, and the protrusion 16 is urged toward the bottom surface 1a of the housing 1, that is, backwards, by a return spring 17 mounted in the pressure receiving member 3. Further, between the rear surface of the protrusion 16 and the front surface of the reaction force receiving member 2, there is arranged an annular adjusting plate 18 so as to be slidable in the axial direction, that is, in the longitudinal direction. The rear surface of the protrusion 16 abuts the adjusting plate 18 to regulate the return position of the service piston 10. Here, an adjusting screw 19 is passed through through-holes formed in the cover 4, the pressure receiving member 3, and the adjusting plate 18, and the tip end portion of the adjusting screw 19 is threadedly engaged with a nut 20 arranged at the rear of the adjusting plate 18. When the adjusting screw 19 is turned with respect to the nut 20, the position of the adjusting plate 18 is moved forwards or backwards to thereby adjust the gap formed between the service piston 10 and the disc 9.

Between the piston portion 11b of the parking piston 11 and the bottom surface 1a of the housing 1, there is mounted a disc spring 21 serving as the urging means of the present invention that urges the parking piston 11 toward the service piston 10, that is, forwardly, with the bottom surface 1a of the housing 1 constituting the support surface for supporting the disc spring 21.

Next, the operation of the wet brake according to this embodiment will be described. First, the case will be described in which the service brake is to be worked in this wet brake. Here, pressure oil is poured into the parking oil chamber 14 from the parking oil port 15 to attain a state in which the parking brake is released, that is, a state in which the parking piston 11 is pressurized backwards against the urging force of the disc spring 21 by the pressure oil to cause the rear end surface of the piston portion 11b thereof to abut the bottom surface 1a of the housing 1.

When, in the state in which the parking brake is thus released, pressure oil is poured into the service oil chamber 12 from the service oil port 13, the service piston 10 moves to the front side of the housing 1 against the urging force of the return spring 17, and the plurality of pressurizing plates 8 and the plurality of discs 9 are pressurized toward the pressure receiving member 3 by the front end surface of the piston portion 10b thereof, whereby frictional force is generated between the pressurizing plates 8 and the discs 9 to apply a braking force to the output shaft 6, thereby braking the wheel.

When the pressure oil poured into the service oil chamber 12 is discharged from the service oil port 13, the service piston 10 is caused to move to the rear side of the housing 1 by the urging force of the return spring 17 to be separated from the pressurizing plates 8 and the plurality of discs 9, whereby the braking force that has been applied to the output shaft 6 is canceled.

Next, the case will be described in which the parking brake is to be worked in this wet brake. Here, it is to be assumed that the service brake is in the canceled state. When the pressure oil poured into the parking oil chamber 14 is discharged from the parking oil port 15, the parking piston 11 is moved to the front side of the housing 1 by the urging force of the disc spring 21, and the front end surface of the slide portion 11a thereof abuts the rear end surface of the slide portion 10a of the service piston 10 to pressurize the service piston 10 forwardly, whereby the service piston 10 moves forward in the housing 1 together with the parking piston 11. And, the plurality of pressurizing plates 8 and the plurality of discs 9 are pressurized toward the pressure receiving member 3 by the front end surface of the piston portion 10b of the service piston 10, whereby a frictional force is generated between the pressurizing plates 8 and the discs 9 to apply a braking force to the output shaft 6 at the time of parking, thereby braking the wheel.

When pressure oil is poured into the parking oil chamber 14 again from the parking oil port 15, the parking piston 11 is pressurized backwards by the pressure oil against the urging force of the disc spring 21, whereby the parking piston 11 moves backwards, and the pressurization of the service piston 10 by the piston 11 is canceled. As a result, the service piston 10 moves backwards by the urging force of the return spring 17 to be separated from the pressurizing plates 8 and the plurality of discs 9, whereby the braking force at the time of parking that has been acting on the output shaft 6 is canceled.

As described above, the reaction force receiving member 2 functions as a reaction force receiving member common to the service piston 10 and the parking piston 11, so that, as compared with the case in which reaction force receiving members respectively corresponding to the service piston 10 and the parking piston 11 are provided, the number of parts is reduced, and the construction of the wet brake as a whole is simplified, thereby facilitating the assembly.

Further, since the reaction force receiving member 2, the service piston 10, and the parking piston 11 can be manufactured by simultaneous machining, the relative position between the reaction force receiving member 2, the service piston 10, and the parking piston 11 is accurately determined, and, further, the machining can be effected by a single process, thus facilitating the production.

When assembling this wet brake, there are accommodated and arranged sequentially in the housing 1 the disc spring 21, the parking piston 11, the reaction force receiving member 2, the service piston 10, the discs 9, the pressure receiving member 3, etc. in that order as from the bottom surface 1a side, and, in this state, the cover 4 is fixed to the end portion of the housing 1 on the opposite side of the bottom surface 1a by means of the bolts 5. The outer peripheral portion of the housing 1 is cylindrical, and the reaction force receiving member 2 and the pressure receiving member 3 are formed in annular configurations, respectively, the reaction force receiving member 2 and the pressure receiving member 3 being fitted into the housing 1. Thus, it is easy to achieve high assembling accuracy, which makes it easier to achieve high machining accuracy, thereby achieving a reduction in machining cost.

Further, since the housing 1 has the bottom surface 1a constituting the support surface for the disc spring 21, there is no need to newly provide a support member for the disc spring 21, thus simplifying the structure of the wet brake as a whole.

As described above, in accordance with the present invention, there is provided a wet brake including: a bottomed cylindrical housing accommodating a parking piston, a service piston and discs therein and having a bottom surface through which an output shaft is passed, the bottom surface constituting a support surface which supports an urging means for urging the parking piston toward the service piston; and a reaction force receiving member which is fitted into the housing so as to be arranged between the parking piston and the service piston and functions common to the parking piston and the service piston. Accordingly, it is possible to realize a wet brake having a simple structure and which is easy to assemble.

A housing (1) is formed as a bottomed cylinder with a bottom surface (1a). In the housing (1), there are accommodated and sequentially arranged an annular disc spring (21), a parking piston (11), a reaction force receiving member (2), a service piston (10), discs (9) and a pressure receiving member (3), etc. in that order as from the bottom surface (1a) side, with an annular cover (4) being fixed to the end portion of the housing (1) on the opposite side of the bottom surface (1a). The disc spring (21) urges the parking piston (11) toward the service piston (10), and the bottom surface (1a) of the housing (1) constitutes a support surface for supporting the disc spring (21). The reaction force receiving member (2) functions as a reaction force receiving member common to the service piston (10) and the parking piston (11).

## Claims

1. A wet brake, in which a service piston (10) pressurizes discs (9) mounted to an output shaft (6) to thereby apply a braking force to the output shaft (6) and in which a parking piston (11) pressurizes the discs (9) through the service piston (10) to thereby generate a braking force at a time of parking, wherein
a housing (1) in a form of a bottomed cylinder is accommodating the parking piston (11), the service piston (10) and the discs (9) therein and having a bottom surface (1a) through which the output shaft (6) is passed, the bottom surface (1a) constituting a support surface which supports an urging means (21) for urging the parking piston (11) toward the service piston (10); and
a reaction force receiving member (2) which is fitted into the housing (1) and so as to be arranged between the parking piston (11) and the service piston (10) and is common to the parking piston (11) and the service piston (10),
**characterized in that**
an adjusting plate (18) arranged between the reaction force receiving member (2) and a protrusion (16) of the service piston (10) for abutting the protrusion (16) to regulate the return position of the service piston (10); an adjusting screw (19) passed through the adjusting plate (18); and a nut (20) threadedly engaged with a tip end portion of the adjusting screw (19), the adjusting screw (19) being turned with respect to the nut (20) to move the position of the adjusting plate (18) toward the reaction force receiving member (2) or toward the service piston (10) to thereby adjust a gap between the service piston (10) and the disc (9).

2. A wet brake according to claim 1, wherein the urging means (21), the parking piston (11), the reaction force receiving member (2), the service piston (10) and the discs 9 are accommodated in the housing (1) and arranged sequentially in that order as from the bottom surface (1a) side thereof.

3. A wet brake according to one of claims 1 or 2, wherein, at the time of parking, a part of the parking piston (11) abuts the service piston (10) to pressurize the discs (9).

4. A wet brake according to one of claims 1 to 3, wherein a parking oil chamber (14) is formed between a first surface of the reaction force receiving member (2) opposed to the housing bottom surface (1a) and the parking piston (11), and a service oil chamber (12) being formed between a second surface of the reaction force receivingmember (2) on the opposite side of the first surface thereof and the service piston (10).

5. A wet brake according to one of claims 1 to 4, wherein a through-hole is formed at the center of the reaction force receiving member (2), the reaction force receiving member (2) having in its outer periphery, a cylindrical surface corresponding to the inner peripheral surface of the housing (1), and being fitted into the housing (1) for assembly.

6. A wet brake according to claim 5, wherein the parking piston (11) and the service piston (10) respectively have in their outer periphery cylindrical surfaces corresponding to the inner peripheral surface of the through-hole of the reaction force receiving member (2), and the parking piston (11) is inserted into a first portion of the through-hole of the reaction force receiving member (2) on the housing bottom surface (1a) side, while the service piston (10) is inserted into a second portion of the through-hole of the reaction force receiving member (2) on the opposite side of the first portion of the through-hole, with the parking piston (11) and the service piston (10) being retained so as to be slidable in the axial direction.

7. A wet brake according to one of claims 1 to 6, wherein the reaction force receiving member (2), the parking piston (11) and the service piston (10) are manufactured by simultaneous machining.

8. A wet brake according to one of claims 1 to 7, further comprising a pressure receiving member (3) arranged so as to be opposed to the service piston (10) with the discs (9) therebetween, the pressure receiving member (3) having in its outer periphery a cylindrical surface corresponding to the inner peripheral surface of the housing (1) and being fitted into the housing (1) for assembly.

9. A wet brake according to claim 8, wherein the service piston (10) has a protrusion (16) protruding sidewise with respect to the moving direction thereof, a return spring (17) for urging the service piston (10) toward the housing bottom surface (1a) being arranged between the pressure receiving member (3) and the protrusion (16) of the service piston (10).

## Patentansprüche

1. Nassbremse, in welcher ein Betriebskolben (10) Scheiben (9) mit Druck beaufschlagt, welche an einer Ausgabewelle (6) befestigt sind, um **dadurch** eine Bremskraft auf die Ausgabewelle (6) aufzubringen, und in welcher ein Parkkolben (11) durch den Betriebskolben (10) die Scheiben (9) mit Druck beaufschlagt, um **dadurch** eine Bremskraft zur Zeit des Parkens zu erzeugen, wobei ein Gehäuse in einer Form eines Zylinders mit Boden den Parkkolben (11), den Betriebskolben (10) und die Scheiben (9) in sich aufnimmt, und eine Bodenfläche (1a) hat, durch welche die Ausgabewelle (6) durchgeführt ist, wobei die Bodenfläche (1a) eine Abstützfläche bildet, welche eine Drängeinrichtung (21) zum Drängen des Parkkolbens (11) in Richtung des Betriebskolbens (10) abstützt; und ein reaktionskraftempfangendes Element (2), welches in das Gehäuse (1) eingepasst ist und zwar so, um zwischen dem Parkkolben (11) und dem Betriebskolben angeordnet zu sein, und welches sowohl an dem Parkkolben (11) als auch dem Betriebskolben (10) anliegt,
**gekennzeichnet durch**
eine Justierungsplatte (18), welche zwischen dem reaktionskraftempfangenden Element (2) und einem Vorsprung (16) des Betriebskolbens (10) für ein Anstoßen des Vorsprungs (16) angeordnet ist, um die Rückkehrposition des Betriebskolbens (10) zu regulieren; eine Justierungsschraube (19), die **durch** die Justierungsplatte (18) durchgeführt ist; und eine Mutter (20), die über ein Gewinde mit einem Spitzenendabschnitt der Justierungsschraube (19) in Eingriff ist, wobei die Justierungsschraube (19) hinsichtlich der Mutter (20) gedreht wird, um die Position der Justierungsplatte (18) in Richtung des reaktionskraftempfangenden Elements (2) oder in Richtung des Betriebskolbens (10) zu bewegen, um **dadurch** einen Spalt zwischen dem Betriebskolben (10) und der Scheibe (9) zu justieren.

2. Nassbremse gemäß Anspruch 1, wobei die Drängeinrichtung (21), der Parkkolben (11), das reaktionskraftempfangende Element (2) und die Scheiben (9) in dem Gehäuse (1) aufgenommen sind und der Reihe nach in jener Reihenfolge von der Bodenfläche (1a) von diesem aus angeordnet sind.

3. Nassbremse nach einem der Ansprüche 1 oder 2, wobei zur Zeit des Parkens ein Teil des Parkkolbens (11) an dem Betriebskolben (10) anliegt, um die Scheiben (9) mit Druck zu beaufschlagen.

4. Nassbremse nach einem der Ansprüche 1 bis 3, wobei eine Parkölkammer (14) zwischen einer ersten Fläche des reaktionskraftempfangenden Elements (2), welche gegenüber der Gehäusebodenfläche (1a) liegt, und dem Parkkolben ausgebildet ist, und eine Betriebsölkammer (12) zwischen einer zweiten Fläche des reaktionskraftempfangenden Elements (2) auf der gegenüberliegenden Seite der ersten Fläche von diesem und dem Betriebskolben (10) ausgebildet ist.

5. Nassbremse nach einem der Ansprüche 1 bis 4, wobei ein Durchgangsloch in der Mitte des reaktionskraftempfangenden Elements (2) ausgebildet ist, wobei das reaktionskraftempfangende Element (2) eine zylindrische Fläche in seinem äußeren Umfang hat, welche zu der inneren Umfangsfläche des Gehäuses korrespondiert, und zum Zusammenbau in das Gehäuse (1) eingepasst wird.

6. Nassbremse nach Anspruch 5, wobei der Parkkolben (11) und der Betriebskolben (10) jeweils in ihren äußeren Umfängen zylindrische Flächen haben, die zu der inneren Umfangsfläche des Durchgangslochs des reaktionskraftempfangenden Elements (2) korrespondieren, und der Parkkolben (11) ist in einen ersten Abschnitt des Durchgangsloches des reaktionskraftempfangenden Elements (2) auf der Seite der Gehäusebodenfläche (1a) eingefügt, während der Betriebskolben (10) in einen zweiten Abschnitt des Durchgangslochs des reaktionskraftempfangenden Elements (2) an der gegenüberligenden Seite des ersten Abschnitts des Durchgangslochs eingefügt ist, wobei der Parkkolben (11) und der Betriebskolben (10) gehalten werden, um in der axialen Richtung gleitbar zu sein.

7. Nassbremse nach einem der Ansprüche 1 bis 6, wobei das reaktionskraftempfangende Element (2), der Parkkolben (11) und der Betriebskolben (10) durch eine simultane Bearbeitung hergestellt sind.

8. Nassbremse nach einem der Ansprüche 1 bis 7, welche ferner ein druckempfangendes Element (3) aufweist, welches angeordnet ist, um dem Betriebskolben gegenüber zu sein, wobei die Scheiben (9) zwischen ihnen liegen, wobei das druckempfangende Element (3) eine zylindrische Fläche in seinem äußeren Umfang hat, welche zu der inneren Umfangsfläche des Gehäuses korrespondiert, und zum Zusammenbau in das Gehäuse (1) eingepasst wird.

9. Nassbremse nach Anspruch 8, wobei der Betriebskolben (10) einen Vorsprung (16) hat, der bezüglich der Bewegungsrichtung von diesem seitlich hervorragt, wobei eine Rückholfeder (17) zum Drängen des Betriebskolbens (10) in Richtung der Gehäusebodenfläche (1a) zwischen dem druckempfangenden Element (3) und dem Vorsprung (16) des Betriebskolbens (10) angeordnet ist.

## Revendications

1. Frein humide dans lequel un piston de service (10) met sous pression des disques (9) montés sur un arbre de sortie (6) afin d'appliquer une force de freinage sur l'arbre de sortie (6) et dans lequel un piston de stationnement (11) met sous pression les disques (9) par le biais du piston de service (10) afin de générer une force de freinage au moment du stationnement, dans lequel :
un boîtier (1) se présentant sous la forme d'un cylindre inférieur loge le piston de stationnement (11), le piston de service (10) et les disques (9) et ayant une surface inférieure (1a) dans laquelle passe l'arbre de sortie (6), la surface inférieure (1a) constituant une surface de support qui supporte un moyen de poussée (21) permettant de pousser le piston de stationnement (11) vers le piston de service (10) ; et
un élément de réception de force de réaction (2) qui est ajusté dans le boîtier (1) de manière à être agencé entre le piston de stationnement (11) et le piston de service (10) et est commun au piston de stationnement (11) et au piston de service (10),
**caractérisé en ce que**:
un plateau d'ajustement (18) est agencé entre l'élément de réception de force de réaction (2) et une saillie (16) du piston de service (10) pour buter contre la saillie (16) afin de réguler la position de retour du piston de service (10) ; une vis d'ajustement (19) traverse le plateau d'ajustement (18) ; et un écrou (20) est engagé par filetage avec une partie d'extrémité de la vis d'ajustement (19), la vis d'ajustement (19) étant tournée par rapport à l'écrou (20) pour déplacer la position du plateau d'ajustement (18) vers l'élément de réception de force de réaction (2) ou vers le piston de service (10) afin d'ajuster un interstice entre le piston de service (10) et le disque (9).

2. Frein humide selon la revendication 1, dans lequel le moyen de poussée (21), le piston de stationnement (11), l'élément de réception de force de réaction (2), le piston de service (10) et les disques (9) sont logés dans le boîtier (1) et agencés de manière séquentielle dans cet ordre à partir du côté de la surface inférieure (1a) de celui-ci.

3. Frein humide selon la revendication 1 ou 2, dans lequel au moment du stationnement, une partie du piston de stationnement (11) bute contre le piston de service (10) afin de mettre sous pression les disques (9).

4. Frein humide selon l'une quelconque des revendications 1 à 3, dans lequel une chambre d'huile de stationnement (14) est formée entre une première surface de l'élément de réception de force de réaction (2) opposée à la surface inférieure du boîtier (1a) et le piston de stationnement (11), une chambre d'huile de service (12) étant formée entre une deuxième surface de l'élément de réception de force de réaction (2) sur le côté opposé de la première surface de celui-ci et le piston de service (10).

5. Frein humide selon l'une quelconque des revendications 1 à 4, dans lequel un trou traversant est formé au centre de l'élément de réception de force de réaction (2), l'élément de réception de force de réaction (2) ayant dans sa périphérie externe une surface cylindrique correspondant à la surface périphérique interne du boîtier (1) et étant ajusté dans le boîtier (1) en vue de l'assemblage.

6. Frein humide selon la revendication 5, dans lequel le piston de stationnement (11) et le piston de service (10) ont respectivement au niveau de leur périphérie externe des surfaces cylindriques correspondant à la surface périphérique interne du trou traversant de l'élément de réception de force de réaction (2), et le piston de stationnement (11) est inséré dans une première partie du trou traversant de l'élément de réception de force de réaction (2) sur le côté de la surface inférieure du boîtier (1a), tandis que le piston de service (10) est inséré dans une deuxième partie du trou traversant de l'élément de réception de force de réaction (2) sur le côté opposé de la première partie du trou traversant, le piston de stationnement (11) et le piston de service (10) étant retenus de manière à pouvoir coulisser dans la direction axiale.

7. Frein humide selon l'une quelconque des revendications 1 à 6, dans lequel l'élément de réception de force de réaction (2), le piston de stationnement (11) et le piston de service (10) sont fabriqués par usinage simultané.

8. Frein humide selon l'une quelconque des revendications 1 à 7, comprenant en outre un élément de réception de pression (3) agencé de manière à être opposé au piston de service (10) avec les disques (9) entre les deux, l'élément de réception de pression (3) ayant au niveau de sa périphérie externe une surface cylindrique correspondant à la surface périphérique interne du boîtier (1) et étant ajusté dans le boîtier (1) en vue de l'assemblage.

9. Frein humide selon la revendication 8, dans lequel le piston de service (10) possède une saillie (16) qui fait saillie sur le côté par rapport au sens du déplacement de celui-ci, un ressort de rappel (17) permettant de pousser le piston de service (10) vers la surface inférieure du boîtier (1a), agencé entre l'élément de réception de pression (3) et la saillie (16) du piston de service (10).
